# EUROPÄISCHE PATENTSCHRIFT

(11) **EP 0 572 898 B1**
(45) Veröffentlichungstag und Bekanntmachung des Hinweises auf die Patenterteilung: **05.11.1997**
(21) Anmeldenummer: 93108388.5
(22) Anmeldetag: 25.05.1993
(51) Int. Cl.: C09B 69/10, G02F 1/35, C08F 20/34

(54) **Polymerisate, die Methin- oder Azamethinfarbstoffe enthalten**
Polymers containing methine or azamethine dyes
Polymères contenant des colorants de type méthinique ou azaméthinique

(30) Priorität: 04.06.1992 DE 4218359
(43) Veröffentlichungstag der Anmeldung: 08.12.1993
(73) Patentinhaber: BASF Aktiengesellschaft, 67063 Ludwigshafen (DE)
(72) Erfinder: Etzbach, Karl-Heinz, Dr., D-67227 Frankenthal (DE); Sens, Ruediger, Dr., W-6800 Mannheim 1 (DE); Kilburg, Heike, Dr., W-6720 Speyer (DE)

(56) Entgegenhaltungen:
- EP-A- 0 194 747
- EP-A- 0 205 291
- GB-A- 2 255 336
- JOURNAL OF POLYMER SCIENCE, POLYMER CHEMISTRY EDITION Bd. 28, Nr. 1 , 15. Januar 1990 , NEW YORK US Seiten 1 - 13 D. R. ROBELLO 'Linear Polymers for Nonlinear Optics. I. Polyacrylates Bearing Aminonitro-Stilbene and - Azobenzene Dyes'

## Beschreibung

Die vorliegende Erfindung betrifft neue Methin- oder Azamethinfarbstoffe enthaltende Polymerisate, die als charakteristische Monomereinheiten Reste der Formeln I, II, III und IV 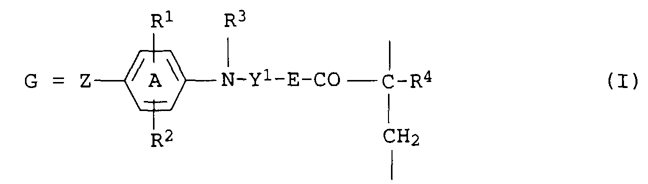 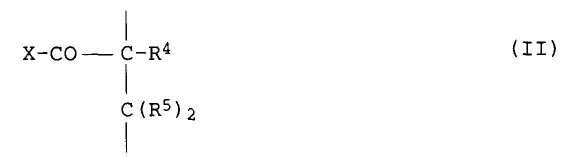 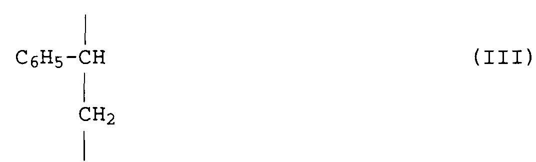 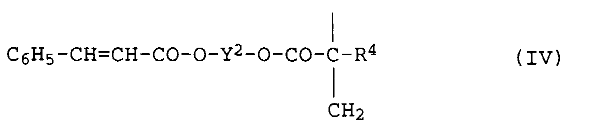 aufweisen, worin
- G: einen zweiwertigen Rest aus der Benzol-, Naphthalin-, Pyridin-, Chinolin-, Thiazol-, Benzthiophen oder Triazolopyridinreihe
- z: Stickstoff oder CH,
- R¹ und R²: unabhängig voneinander jeweils Wasserstoff, C₁-C₆-Alkyl oder C₁-C₆-Alkoxy, das gegebenenfalls durch Phenyl oder C₁-C₄-Alkoxy substituiert ist,
- R³: Wasserstoff, C₁-C₆-Alkyl, C₅-C₇-Cycloalkyl oder C₃-C₄-Alkenyl,
- R⁴: Wasserstoff, Deuterium, Methyl, trideuteriertes Methyl oder Chlor,
- R⁵: Wasserstoff oder Deuterium,
- Y¹ und Y²: unabhängig voneinander jeweils C₂-C₁₁-Alkylen, das gegebenenfalls durch 1 bis 3 Sauerstoffatome in Etherfunktion oder Imino- oder C₁-C₄-Alkyliminogruppen unterbrochen ist,
- E: Sauerstoff, Imino oder C₁-C₄-Alkylimino und
- x: Hydroxy, C₁-C₆-Alkoxy, trideuteriertes Methoxy, 2,3-Epoxypropoxy, Phenoxy, Amino oder C₁-C₄-Mono- oder Dialkylamino bedeuten und
der Ring A benzoanelliert sein kann,
wobei der Anteil der Monomereinheiten der Formel I 1 bis 100 Mol%, der der Formel II 0 bis 99 Mol%, der der Formel III 0 bis 99 Mol% und der der Formel IV 0 bis 75 Mol%, jeweils bezogen auf das Polymerisat, und das mittlere Molekulargewicht des Polymerisats 1.000 bis 100.000 betragen, deren Verwendung in der nicht-linearen Optik sowie die Verwendung von monomeren Methin- oder Azamethinfarbstoffen zur Herstellung der neuen Polymerisate.

Aus J. Polymer Sci., Part A, Polymer Chem., Band 28, Seiten 1 bis 13, 1990, sind Polymerisate bekannt, die in den Seitenketten Azofarbstoffe als Chromophore enthalten. Die Azofarbstoffe stammen dabei aus der Azobenzolreihe. Ferner lehrt die Schrift Polymerisate, die in der Seitenkette Stilbenverbindungen enthalten. Es hat sich jedoch gezeigt, daß solche Polymerisate bei ihrer Anwendung in nichtlinear optischen Systemen noch Mängel aufweisen.

Aus der älteren europäischen Patentanmeldung Nr. 92116096.6 sind weitere Azofarbstoffe enthaltende Polymerisate bekannt.

In Chemical Physics Letters, Vol. 179, Seiten 551 bis 554, 1991, ist die Anwendung von speziellen Cyaninfarbstoffen in nicht-linear optischen Systemen beschrieben.

Aufgabe der vorliegenden Erfindung war es nun, neue Polymerisate bereitzustellen, die über Methin- oder Azamethinfarbstoffe als Chromophor in der Seitenkette verfügen und die vorteilhaft zur Anwendung in nichtlinear optischen Systemen geeignet sein sollten.

Demgemäß wurden die oben näher bezeichneten Methin- oder Azamethinfarbstoffe enthaltenden Polymerisate gefunden.

Bezüglich der Anteile der Monomereinheiten gilt, daß die Summe der Monomereinheiten der Formeln I, II, III und IV jeweils 100 Mol-% ergibt.

Besonders zu nennen sind Methin- oder Azamethinfarbstoffe enthaltende Polymerisate der Formel I, in der G einen Rest der Formel 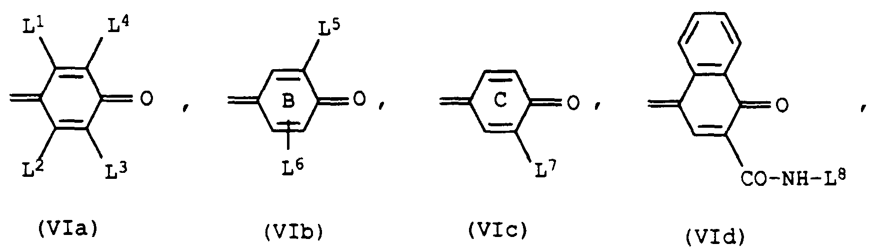 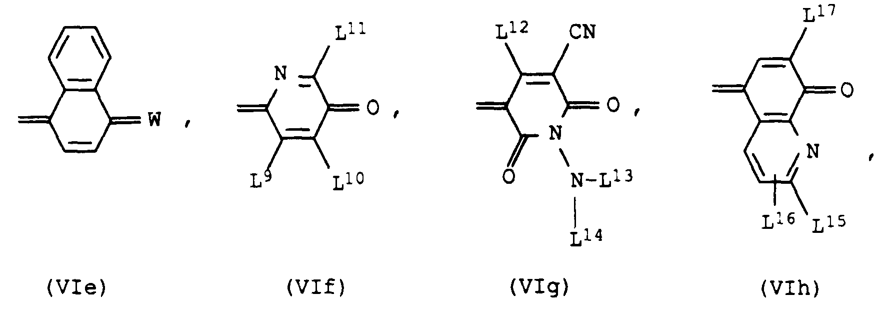 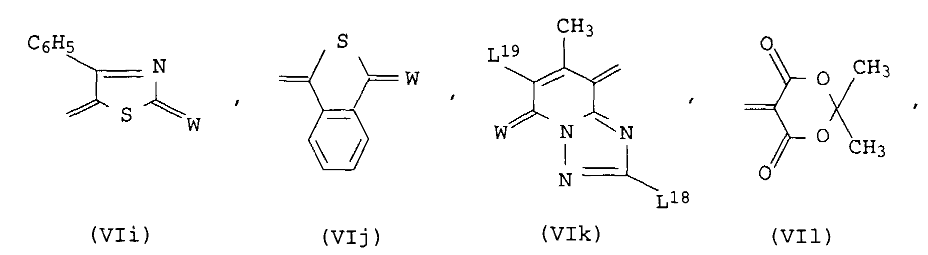 bedeutet, worin
die Ringe B und C benzoanelliert sein können und
- L¹, L² und L³: unabhängig voneinander jeweils für Wasserstoff, Methyl, Fluor oder Chlor,
- L⁴: für Fluor oder Chlor,
- L⁵: für Wasserstoff, Fluor, Chlor, Brom, Hydroxy, Nitro, C₁-C₆-Alkyl, Cyano, C₁-C₄-Alkylsulfonylamino, C₁-C₆-Alkoxycarbonyl, C₁-C₄-Alkylcarbamoyl oder C₂-C₄-Alkanoylamino,
- L⁶: für Wasserstoff, Fluor, Chlor, Cyano, C₁-C₄-Alkylcarbamoyl, C₂-C₄-Alkanoylamino, C₁-C₄-Alkylureido, C₁-C₄-Alkylsulfamoyl oder C₁-C₆-Alkoxycarbonyl,
- L⁷: für einen Rest der Formel 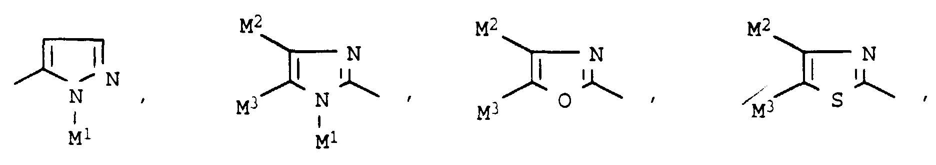 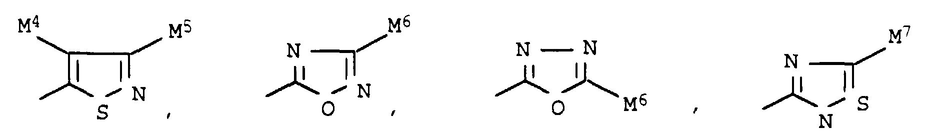 oder 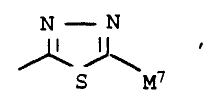
worin
- M¹: die Bedeutung von Wasserstoff, C₁-C₆-Alkyl, Benzyl, Cyclohexyl, Phenyl oder Tolyl,
- M²: die Bedeutung von Wasserstoff, Chlor, C₁-C₆-Alkyl, das gegebenenfalls durch ein Sauerstoffatom in Etherfunktion unterbrochen ist, Phenyl, C₁-C₆-Alkoxy, Cyano oder C₁-C₆-Alkoxycarbonyl, wobei die Alkylgruppe durch ein oder zwei Sauerstoffatome in Etherfunktion unterbrochen sein kann,
- M³: die Bedeutung von Wasserstoff, C₁-C₆-Alkyl, Phenyl, Cyano, Nitro oder C₁-C₆-Alkoxycarbonyl, wobei die Alkylgruppe durch ein oder zwei Sauerstoffatome in Etherfunktion unterbrochen sein kann, oder M² und M³ zusammen die Bedeutung eines anellierten Benzorings,
- M⁴: die Bedeutung von Wasserstoff, Chlor, Cyano, Nitro oder C₁-C₆-Alkoxycarbonyl, wobei die Alkylgruppe durch ein oder zwei Sauerstoffatome in Etherfunktion unterbrochen sein kann,
- M⁵: die Bedeutung von Chlor, C₁-C₆-Alkyl, das gegebenenfalls durch ein Sauerstoffatome in Etherfunktion unterbrochen ist, C₁-C₆-Alkoxy oder C₁-C₆-Alkylthio,
- M⁶: die Bedeutung von C₁-C₆-Alkyl und
- M⁷: die Bedeutung von Wasserstoff, Chlor, Cyano, Thiocyanato, C₁-C₆-Alkyl, das gegebenenfalls durch ein Sauerstoffatom in Etherfunktion unterbrochen ist, C₁-C₆-Alkoxy, C₁-C₆-Alkylthio, 2-(C₁-C₂-Alkoxycarbonyl)ethylthio oder C₁-C₆-Alkoxycarbonyl, wobei die Alkylgruppe durch ein oder zwei Sauerstoffatome in Etherfunktion unterbrochen sein kann, besitzen,
- L⁸: für einen Rest der Formel 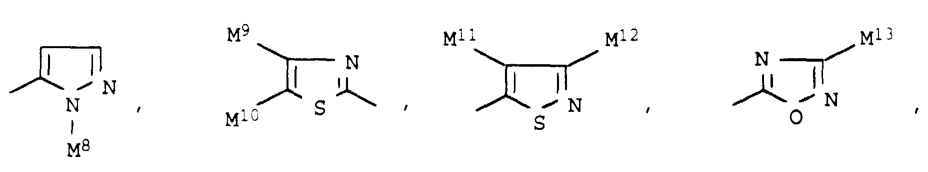 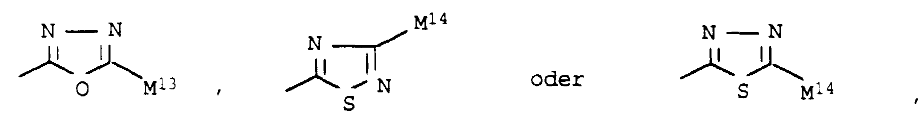
worin
- M⁸: die Bedeutung von C₁-C₆-Alkyl oder Cyclohexyl,
- M⁹: die Bedeutung von Wasserstoff, Chlor, C₁-C₆-Alkyl, das gegebenenfalls durch 1 Sauerstoffatom in Etherfunktion unterbrochen ist, C₁-C₆-Alkoxy oder C₁-C₆-Alkoxycarbonyl, wobei die Alkylgruppe durch 1 oder 2 Sauerstoffatome in Etherfunktion unterbrochen sein kann,
- M¹⁰: die Bedeutung von Wasserstoff, C₁-C₆-Alkyl, Cyano, Nitro oder C₁-C₆-Alkoxycarbonyl, wobei die Alkylgruppe durch 1 oder 2 Sauerstoffatome in Etherfunktion unterbrochen sein kann,
- M¹¹: die Bedeutung von Wasserstoff, Chlor, Cyano, Nitro oder C₁-C₆-Alkoxycarbonyl, wobei die Alkylgruppe durch 1 oder 2 Sauerstoffatome in Etherfunktion unterbrochen sein kann,
- M¹²: die Bedeutung von Chlor, C₁-C₆-Alkyl, das gegebenenfalls durch 1 Sauerstoffatom in Etherfunktion unterbrochen ist, C₁-C₆-Alkoxy oder C₁-C₆-Alkylthio,
- M¹³: die Bedeutung von C₁-C₆-Alkyl und
- M¹⁴: die Bedeutung von Wasserstoff, Chlor, Cyano, Thiocyanato, C₁-C₆-Alkyl, das gegebenenfalls durch 1 Sauerstoffatom in Etherfunktion unterbrochen ist, C₁-C₆-Alkoxy, C₁-C₆-Alkylthio, 2-(C₁-C₂-Alkoxycarbonyl)ethylthio oder C₁-C₆-Alkoxycarbonyl, wobei die Alkylgruppe durch 1 oder 2 Sauerstoffatome in Etherfunktion unterbrochen sein kann, besitzen,
- L⁹: für Wasserstoff, Fluor, Chlor, Methyl oder einen Rest der Formel
-NH-CO-B¹, -NH-CO-OB¹, -NH-CO-NB¹B², NH-CS-OB¹, -NH-CS-B¹B², -NH-SO₂-B¹ oder -NH-SO₂-NB¹B²,
worin
B¹ und B² unabhängig voneinander jeweils die Bedeutung von C₁-C₄-Alkyl besitzen,
- L¹⁰: Wasserstoff, Fluor oder Chlor oder L⁹ und L¹⁰ einen anellierten Benzoring,
- L¹¹: für einen Rest der Formel
-CO-OB¹, -CO-NHB¹, -CO-NH-CO-B¹, -NH-CO-B¹, -NH-CO-OB¹, -NH-CO-NB¹B², -NH-CS-OB¹, -NH-CS-NB¹B², -NH-SO₂-B¹ oder -NH-SO₂-B¹B²,
worin
B¹ und B² jeweils die obengenannte Bedeutung besitzen,
- L¹²: für Wasserstoff oder C₁-C₄-Alkyl,
- L¹³ und L¹⁴: unabhängig voneinander jeweils für Wasserstoff, C₁-C₁₂-Alkyl, C₅-C₇-Cycloalkyl, Phenyl, Pyridyl, C₁-C₆-Alkanoyl, C₁-C₆-Alkoxycarbonyl, C₁-C₆-Alkylsulfonyl, C₅-C₇-Cycloalkylsulfonyl, Phenylsulfonyl, Pyridylsulfonyl, Benzoyl, Pyridylcarbonyl oder Thienylcarbonyl oder R² und R³ zusammen mit dem sie verbindenden Stickstoffatom einen fünf- oder sechsgliedrigen gesättigten heterocyclischen Rest, der gegebenenfalls weitere Heteroatome enthält,
- L¹⁵: für Wasserstoff oder C₁-C₆-Alkyl,
- L¹⁶: für Wasserstoff, Fluor, Chlor oder Brom,
- L¹⁷: für Fluor, Chlor oder Brom,
- L¹⁸: für C₁-C₁₂-Alkyl, das durch ein bis drei Sauerstoffatome in Etherfunktion unterbrochen sein kann, Phenyl oder Hydroxy,
- L¹⁹: für Cyano, Carbamoyl, Carboxyl oder C₁-C₆-Alkoxycarbonyl und
- W: für Sauerstoff oder einen Rest der Formel 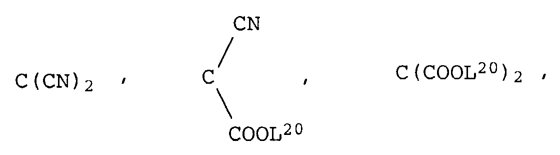 wobei L²⁰ C₁-C₆-Alkyl oder C₃-C₄-Alkenyl bedeutet, stehen.

Alle in den obengenannten Formeln auftretenden Alkyl-, Alkylen- oder Alkenylgruppen können sowohl geradkettig als auch verzweigt sein.

Reste R¹, R², R³, L⁵, L¹³, L¹⁴, L¹⁵, L¹⁸, L²⁰, M¹, M², M³, M⁵, M⁶, M⁷, M⁸, M⁹, M¹⁰, M¹², M¹³, M¹⁴, B¹ und B² sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste L¹³, L¹⁴ und L¹⁸ sind z.B. Heptyl, Octyl, 2-Ethylhexyl, Isooctyl, Nonyl, Isononyl, Decyl, Isodecyl, Undecyl oder Dodecyl (die obigen Bezeichnungen Isooctyl, Isononyl und Isodecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436).

Reste M⁶, M⁷, M¹² und M¹⁴ sind z.B. Methylthio, Ethylthio, Propylthio, Isopropylthio, Butylthio, Isobutylthio, Pentylthio, Hexylthio.

Reste M², M⁶, M⁷, M⁹, M¹², M¹⁴ und X sind z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste L¹³ und L¹⁴ sind z.B. Methylsulfonyl, Ethylsulfonyl, Propylsulfonyl, Isopropylsulfonyl, Butylsulfonyl, Isobutylsulfonyl, sec-Butylsulfonyl, Pentylsulfonyl, Isopentylsulfonyl, Neopentylsulfonyl oder Hexylsulfonyl.

Reste L⁵, L⁶, L¹³, L¹⁴, L¹⁹, M², M³, M⁴, M⁹, M¹⁰, M¹¹ und M¹⁴ sind z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl oder Hexyloxycarbonyl.

Reste M², M³, M⁴, M⁷, M⁹, M¹⁰, M¹¹ und M¹⁴ sind z.B. 2-Methoxyethoxycarbonyl, 2-Ethoxyethoxycarbonyl, 3,6-Dioxaheptyloxycarbonyl oder 3,6-Dioxaoctyloxycarbonyl.

Reste R¹ und R² sind z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste X sind z.B. Methylamino, Ethylamino, Propylamino, Isopropylamino, Butylamino, Dimethylamino, Diethylamino, Dipropylamino, Diisopropylamino, Dibutylamino oder N-Methyl-N-ethylamino.

Reste M⁷ und M¹⁴ sind z.B. 2-Methoxycarbonylethylthio oder 2-Ethoxycarbonylethylthio.

Reste R³, L¹³ und L¹⁴ sind z.B. Cyclopentyl, Cyclohexyl oder Cycloheptyl.

Reste R³ und L²⁰ sind z.B. Allyl oder Methallyl.

Reste Y¹ und Y² sind z.B. (CH₂)₂, (CH₂)₃, (CH₂)₄, (CH₂)₅, (CH₂)₆, (CH₂)₇, (CH₂)₈, (CH₂)₉, (CH₂)₁₀, (CH₂)₁₁, CH(CH₃)-CH₂, CH(CH₃)-CH(CH₃), C₂H₄-O-C₂H₄, C₂H₄-NH-C₂H₄, C₂H₄-N(CH₃)-C₂H₄, C₂H₄O-C₂H₄-O-C₂H₄, C₂H₄-NH-C₂H₄-NH-C₂H₄ oder C₂H₄-N(CH₃)-C₂H₄-N(CH₃)-C₂H₄.

Reste E sind z.B. Methylimino, Ethylimino, Propylimino, Isopropylimino oder Butylimino.

Reste L¹³ und L¹⁴ sind z.B. Formyl, Acetyl, Propionyl, Butyryl, Pentanoyl oder Hexanoyl.

Reste L⁵ sind z.B. Methylsulfonylamino, Ethylsulfonylamino, Propylsulfonylamino, Isopropylsulfonylamino oder Butylsulfonylamino.

Reste L⁵ und L⁶ sind z.B. Methylcarbamoyl, Ethylcarbamoyl, Propylcarbamoyl, Isopropylcarbamoyl, Butylcarbamoyl, Acetylamino, Propionylamino oder Butyrylamino.

Reste L⁶ sind z.B. Methylureido, Ethylureido, Propylureido, Isopropylureido, Butylureido, Methylsulfamoyl, Ethylsulfamoyl, Propylsulfamoyl, Isopropylsulfamoyl oder Butylsulfamoyl.

Reste M², M⁵, M⁷, M⁹, M¹², M¹⁴ und L¹⁸ sind z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 4-Methoxybutyl oder 2- oder 4-Ethoxybutyl.

Reste L¹⁸ sind z.B. 2- oder 3-Butoxypropyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl oder 3,6,9-Trioxaundecyl.

Wenn L¹³ und L¹⁴ zusammen mit dem sie verbindenden Stickstoffatom einen fünf- oder sechsgliedrigen gesättigten heterocyclischen Rest, der gegebenenfalls weitere Heteroatome enthält, bedeuten, so können dafür z.B. Pyrrolidinyl, Piperidinyl, Morpholinyl, Piperazinyl oder N-(C₁-C₄-Alkyl)piperazinyl in Betracht kommen.

Bevorzugt sind Methin- oder Azamethinfarbstoffe enthaltende Polymerisate, die als charakteristische Monomereinheiten Reste der Formel Ia 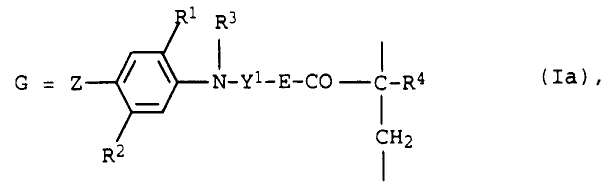 worin G, Z, R¹, R³, R⁴, Y und E jeweils die obengenannte Bedeutung besitzen, und der obengenannten Formel II aufweisen.

Bevorzugt sind weiterhin Methin- oder Azamethinfarbstoffe enthaltende Polymerisate, in denen der Anteil der Monomereinheiten der Formel I 4 bis 50, insbesondere 8 bis 25 Mol-%, der der Formel II 51 bis 96, insbesondere 75 bis 92 Mol-%, der der Formel III 0 bis 30, insbesondere 0 bis 15 Mol-% und der der Formel IV 0 bis 50, insbesondere 0 bis 20 Mol-%, jeweils bezogen auf das Polymerisat, und das mittlere Molekulargewicht des Polymerisats 1500 bis 50 000, insbesondere 2000 bis 25 000 betragen.

Besonders zu nennen sind Methin- oder Azamethinfarbstoffe enthaltende Polymerisate, in denen in Formel I
- R¹ und R²: unabhängig voneinander jeweils Wasserstoff, C₁-C₄-Alkyl oder C₁-C₄-Alkoxy,
- R³: C₁-C₄-Alkyl,
- R⁴: Wasserstoff oder Methyl und
- E: C₂-C₈-Alkylen und
in Formel II
- R⁴: Wasserstoff oder Methyl und
- X: C₁-C₄-Alkoxy bedeuten.

Zur Herstellung der erfindungsgemäßen Polymerisate sind in vorteilhafter Weise Methin- oder Azamethinfarbstoffe der Formel V 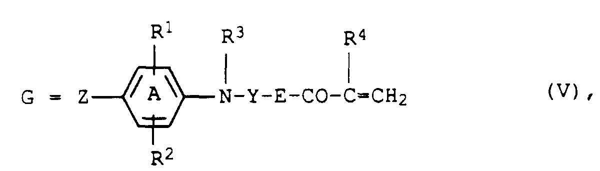 geeignet, in der G, Z, R¹, R², R³, R⁴, Y, E und der Ring A jeweils die obengenannte Bedeutung besitzen.

Die Herstellung der neuen Polymerisate kann nach an sich bekannten Methoden, wie sie z.B. in J. Polymer Sci. (loc.cit.) beschrieben sind, erfolgen.

Zweckmäßig setzt man dabei einen Methin- oder Azamethinfarbstoff der Formel V mit einer Acrylverbindung der Formel VIII 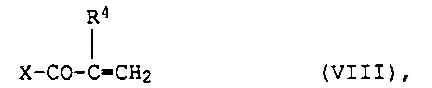 in der R⁴ und X jeweils die obengenannte Bedeutung besitzen, Styrol und eines Zimtsäureesters der Formel IX 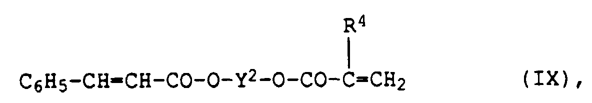 in der Y² und R⁴ jeweils die obengenannte Bedeutung besitzen, im obengenannten Molverhältnis in einem inerten Lösungsmittel (z.B. Toluol oder Xylol) in Gegenwart eines Radikalstarters (z.B. Azo-bis-isobutyronitril) um.

Die Methin- oder Azamethinfarbstoffe der Formel V sind an sich bekannt und z.B. in der EP-A-416 434 oder EP-A-449 109 oder in den älteren Patentanmeldungen EP-A-479 068, EP-A-479 076, EP-A 480 252, EP-A-480 281 oder WO-A-92 19 684 beschrieben oder können nach den dort genannten Methoden erhalten werden.

Die erfindungsgemäßen Methin- oder Azamethinfarbstoffe enthaltenden Polymerisate eignen sich in vorteilhafter Weise zur Anwendung in nichtlinear optischen Systemen (siehe z.B. Chemistry and Industry, 1. Oktober 1990, Seiten 600 bis 608).

Insbesondere ist hierbei die Eignung der Polymeren in der Nachrichtentechnik, in elektrooptischen Modulatoren (z.B. Mach-Zehnder-Interferometer), in optischen Schaltern, bei der Frequenzmischung oder in Wellenleitern hervorzuheben.

Die Herstellung von Schichten, die die erfindungsgemäßen Polymerisate enthalten, erfolgt dabei in an sich bekannter Weise, z.B. durch Naßbeschichtung (Spincoating) mit einer 5 bis 15 gew.%igen Lösung des Polymerisats in einem Lösungsmittel (z.B. Tetrachlorethan, Methylenchlorid oder Tetrahydrofuran).

Bei geeignetem Substitutionsmuster (z.B. Epoxystruktur) können die neuen Polymerisate auch photochemisch, thermisch oder durch Einwirkung von Elektronenstrahlen vernetzt werden.

Die neuen Polymerisate zeichnen sich durch gute Verarbeitbarkeit zu dünnen Schichten, hohe Reinheit, enge Molekulargewichtsverteilung, gute Orientierung im elektrischen Feld, gute Langzeitstabilität, hohe Glasstufen sowie einen hohen elektrooptischen Koeffizienten aus.

Die folgenden Beispiele sollen die Erfindung näher erläutern.

### I. Herstellung der monomeren Methin- oder Azamethinfarbstoffe

### Beispiel 1

a) Zu einer Lösung von 23,5 g N-Ethyl-N-(6-hydroxyhexyl)-m-toluidin in 100 ml Wasser und 20 ml konz. Salzsäure wurden bei 0 bis 5°C 25 ml 40 gew.-% wäßriger Natriumnitritlösung getropft. Nach vollständiger Diazotierung (DC-Kontrolle) wurde mit 40 g Kochsalz versetzt und mit 24 ml 25 gew.%iger wäßriger Ammoniaklösung ein pH-Wert von 9 eingestellt. Dann wurden 100 ml Ethylacetat hinzugegeben und gut verrührt. Die organische Phase wurde abgetrennt, getrocknet und vom Lösungsmittel befreit.
b) Das resultierende Öl (22,4 g) wurde in 100 ml Methanol gelöst und in Gegenwart von 3 g Raney-Nickel 4 Stunden bei Normalbedingungen mit Wasserstoff hydriert. Dann wurde vom Katalysator abfiltriert.
c) Ein Viertel des Reaktionsgemisches wurde mit 5,6 g der Verbindung der Formel 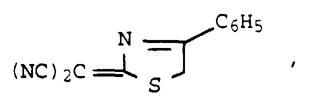 gelöst in 75 ml Ethylacetat und 50 ml Ethanol, versetzt, und zum resultierenden Reaktionsgemisch wurde eine Lösung von 15 g Soda in 75 ml Wasser gegeben.
   Zur resultierenden Lösung wurde bei 25 bis 30°C eine Lösung von 13,5 g Ammoniumperoxodisulfat in 75 ml Wasser getropft. Dann rührte man eine Stunde nach, saugte ab, wusch mit 1,5 l Wasser nach und trocknete unter vermindertem Druck. Man erhielt 8,5 g des Farbstoffs der Formel 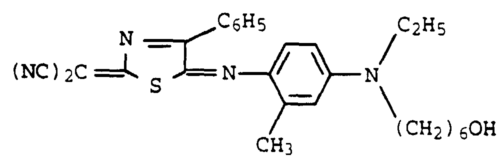
d) 8,5 g des unter c) erhaltenen Farbstoffs wurden in 100 ml Methylenchlorid gelöst und mit 4,2 ml Triethylamin und 0,24 g Hydrochinon versetzt. Zu dieser Lösung tropfte man bei 0 bis 5°C eine Lösung von 2,0 g Methacryloylchlorid in 25 ml Methylenchlorid und rührte 2 Stunden bei 0 bis 5°C und anschließend 12 Stunden bei Raumtemperatur nach. Das Reaktionsgemisch wurde je zweimal mit 50 ml gesättigter Natriumhydrogencarbonat- und 50 ml gesättigter Sodalösung ausgeschüttelt. Die organische Phase wurde über Natriumsulfat getrocknet und vom Lösungsmittel befreit. Der Rückstand wurde säulenchromatographisch gereinigt (Kieselgel-Hexan/Aceton 8:1 v/v). Man erhielt 4,9 g des Farbstoffs der Formel

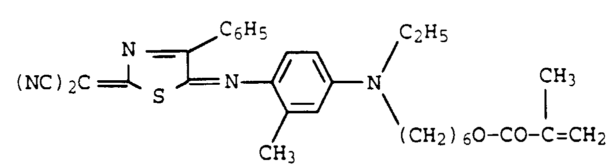

### Beispiel 2

a) Eine Lösung von 153 g N-Methylanilin in 750 ml n-Butanol wurde mit 200 g Kaliumcarbonat und 6 g Kaliumiodid versetzt. Anschließend wurden bei Raumtemperatur innerhalb von 30 Minuten 200 g 6-Chlorhexanol zugegeben. Dann wurde 24 Stunden unter Rückfluß erhitzt, auf Raumtemperatur abgekühlt, vom Salz abgetrennt und vom Lösungsmittel befreit. Der Rückstand wurde destilliert. Man erhielt 196 g N-Methyl-N-(6-hydroxyhexyl)anilin. Kp: 158°C/0,7 mbar.
b) Zu einer Lösung von 103,5 g N-Methyl-N-(6-hydroxyhexyl)anilin in 1000 ml Methylenchlorid wurden bei 0 bis 5°C 105 ml Triethylamin, 6 g Hydrochinon und anschließend eine Lösung von 104,5 g Methacryloylchlorid in 200 ml Methylenchlorid gegeben. Es wurde 2 Stunden bei 0 bis 5°C und 12 Stunden bei Raumtemperatur nachgerührt. Das Reaktionsgemisch wurde je zweimal mit 500 ml gesättiger Natriumhydrogencarbonat- und 500 ml gesättigter Sodalösung ausgeschüttelt. Die organische Phase wurde über Natriumsulfat getrocknet und vom Lösungsmittel befreit. Man erhielt 180 g eines öligen Produkts das die Formel 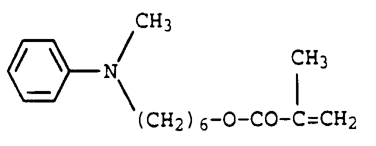 aufwies. Dieses Öl wurde mit soviel N,N-Dimethylformamid verdünnt, bis das Gewicht der Lösung 250 g betrug.
c) 10,64 g Phosphoroxidtrichlorid wurden bei 0 bis 5°C in 400 ml N,N-Dimethylformid getropft. Dann wurde 2 Stunden bei 0 bis 5°C nachgerührt. Die resultierende Lösung wurde zu 25 g der unter b) erhaltenen Lösung getropft. Das Reaktionsgemisch wurde dann 3 Stunden auf 90°C erhitzt, abgekühlt, in 300 ml Eiswasser gegossen und mit Natriumacetat ein pH-Wert von 5 eingestellt. Die Lösung wurde mit 100 ml Methylenchlorid ausgeschüttelt, die organische Phase über Natriumsulfat getrocknet und vom Lösungsmittel befreit. Der Rückstand wurde säulenchromatographisch gereinigt (Kieselgel-Toluol/Ethylacetat 5:4 v/v). Man erhielt 10,2 g des Produkts der Formel 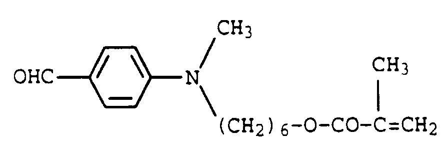
d) 3 g der unter c) beschriebenen Verbindung und 1,9 g der Verbindung der Formel 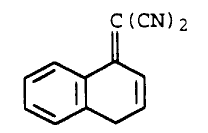 wurden in 50 ml Acetanhydrid eingetragen und bis zur beendigten Umsetzung (DC-Kontrolle) unter Rückfluß erhitzt. Dann wurde abgekühlt, mit 100 ml Isopropanol versetzt und vom Niederschlag abgetrennt. Nach Abtrennen des Lösungsmittels wurde der Rückstand säulenchromatographisch gereinigt (Kieselgel-Toluol/Ethylacetat 2:1 v/v). Man erhielt 1,3 g des Farbstoffs der Formel

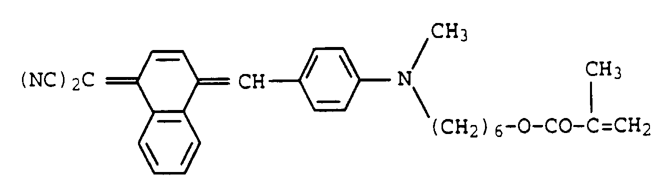

Analog Beispiel 1 und 2 können die in der folgenden Tabelle 1 aufgeführten Produkte erhalten werden.

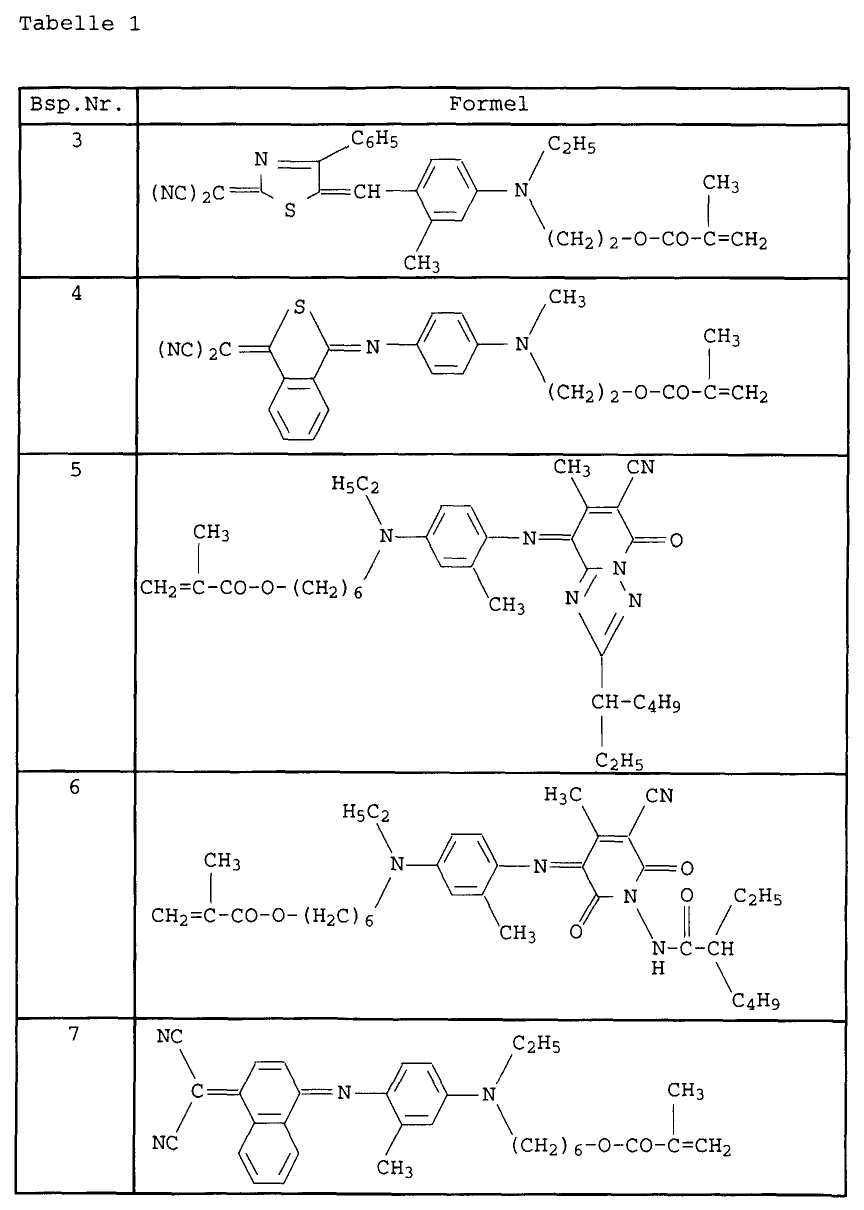

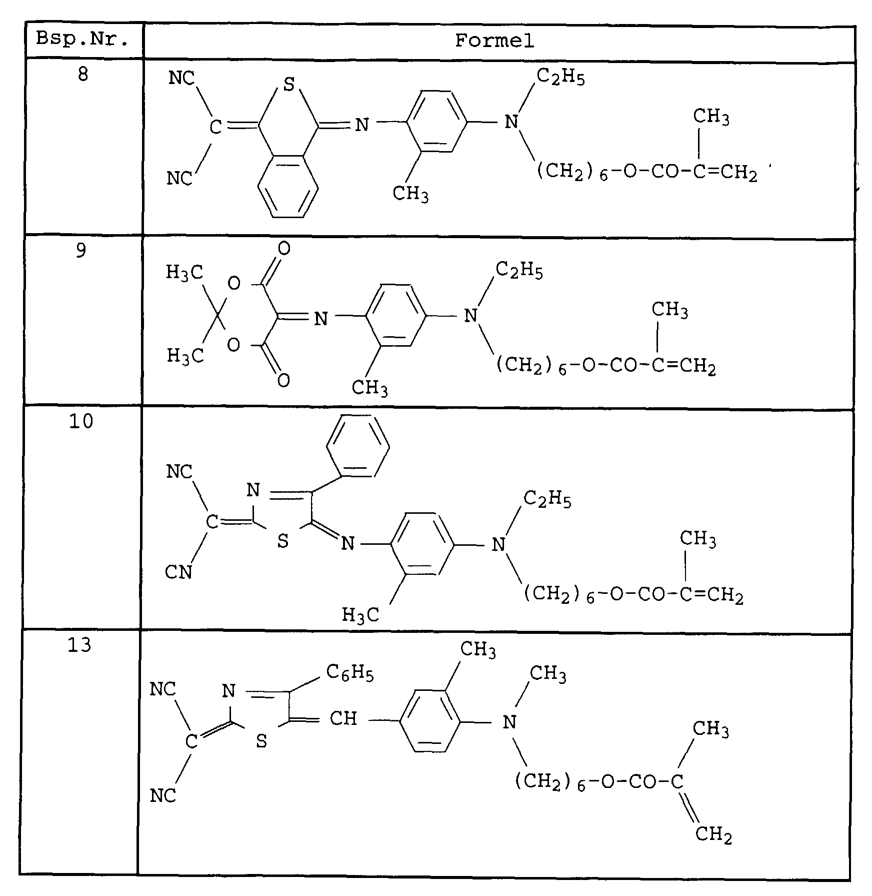

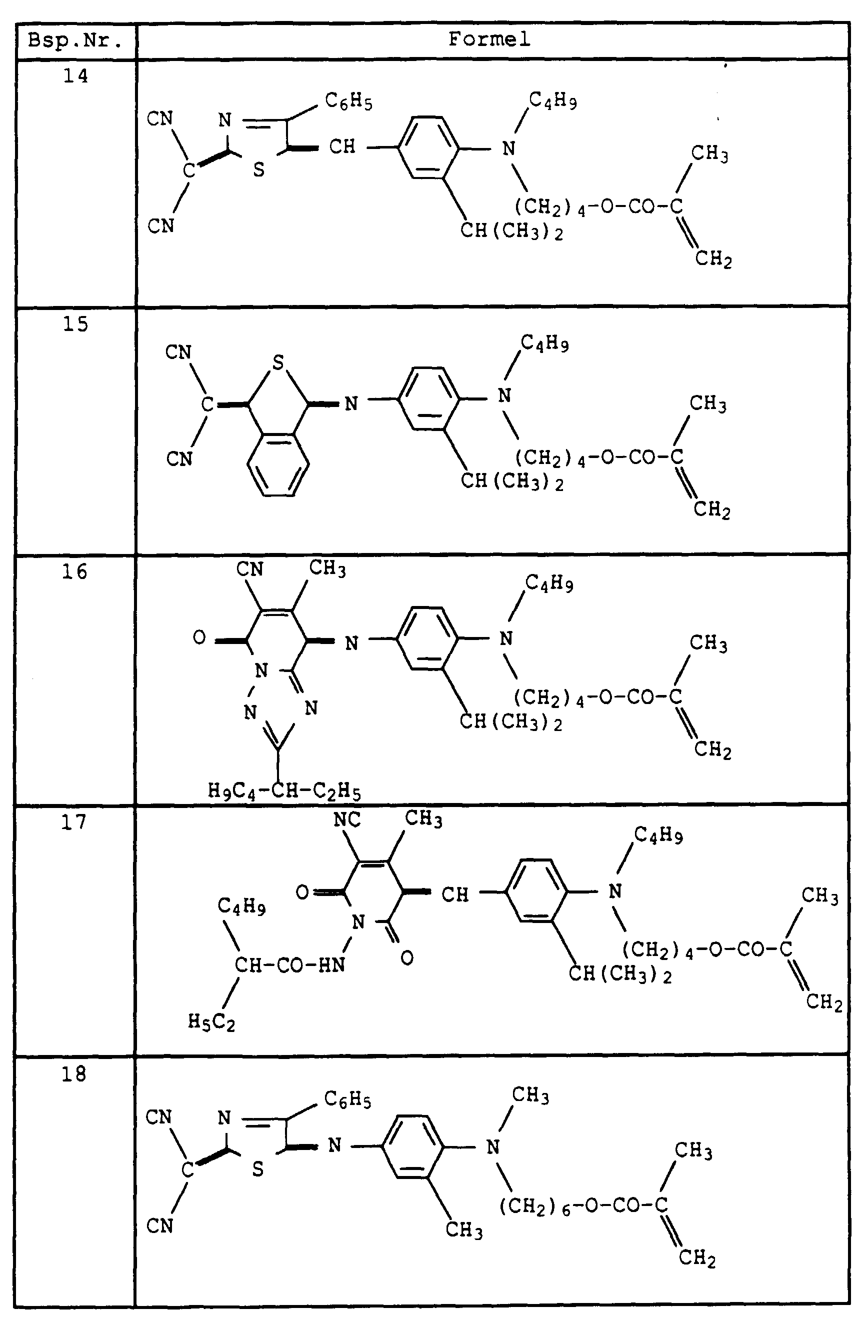

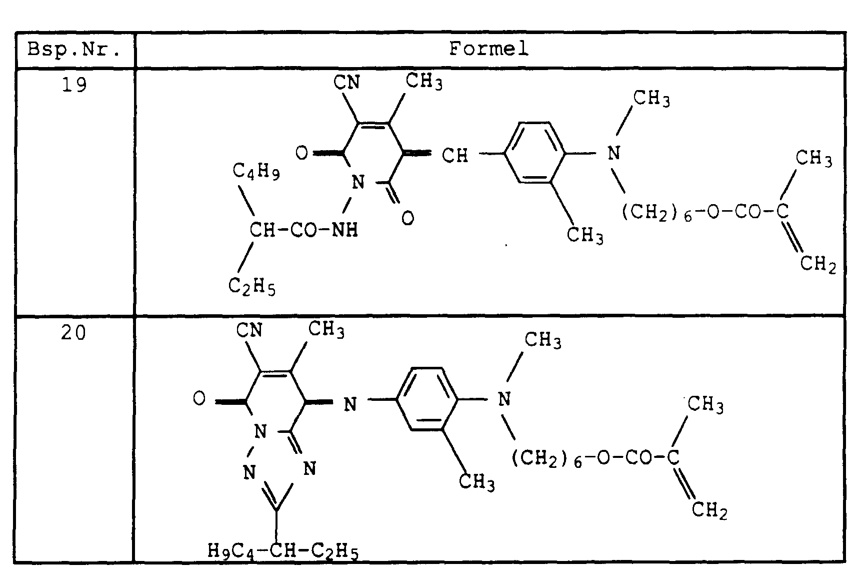

### II. Herstellung des Polymerisats

Allgemeine Polymerisationsvorschrift für die Herstellung von Polyacrylaten folgender Formel: 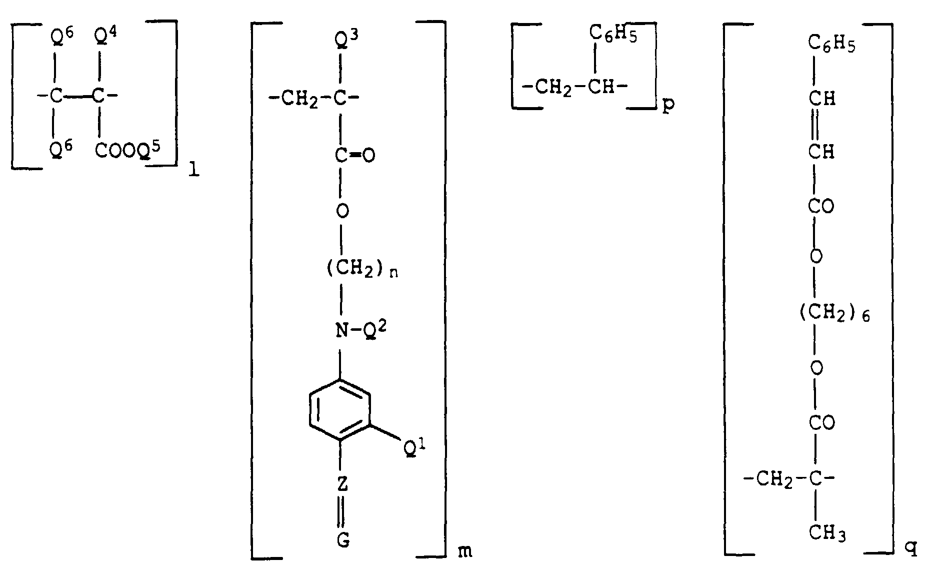 (in der Tabelle als "Farbstoff" bezeichnet)
(Bei den Indices l, m, p und q handelt es sich um die Molprozente der jeweiligen Monomereinheiten, bezogen auf das Polymerisat.)

In einem Schlenkgefäß wurde eine Monomerlösung, bestehend aus m Mol-% Farbstoffmonomer und l+p+q Mol-% Comonomer in absolutem Toluol mit 2 Mol-% Azo-bis-isobutyronitril versetzt. Nach 10-minütigem Hindurchleiten von Argon wurde das Monomergemisch bei 50°C thermostabilisiert. Nach 100 Stunden war die Polymerisationsreaktion beendet. Die Polymere wurden mit Methanol ausgefällt und zweimal aus Hexan/Methanol umgefällt. (Falls noch Monomeranteile vorhanden sind, können diese säulenchromatographisch an Kieselgel z.B. mit Toluol/ Essigester (9:1 v/v) als Eluens abgetrennt werden.) Nach Entfernen des Lösungsmittels wurde das Polymere im Hochvakuum getrocknet. Die quantitative Zusammensetzung der Copolymeren erfolgte mittels UV-Spektroskopie und Elementaranalyse. Die Molekulargewichtsbestimmung erfolgte durch Gelpermeationschromatographie. Die Bestimmung der Glasstufe des Polymeren erfolgte differentialkalorimetrisch.

**Tabelle 2**

| Beispiel Nr. | l | m | p | q | Q⁴ | Q⁵ | Q⁶ | Farbstoff aus Bsp.Nr. | mittl. Molekulargewicht | T_{G} [°C] |
|---|---|---|---|---|---|---|---|---|---|---|
| 21 | 90 | 10 | - | - | CH₃ | CH₃ | H | 3 | 13.415 | 85 |
| 22 | 90 | 10 | - | - | CH₃ | CH₃ | H | 1 | 6.200 | 125 |
| 23 | 90 | 10 | - | - | CH₃ | CH₃ | H | 4 | 9.400 | 120 |

Die Messung auf Eignung der Methin- oder Azamethinfarbstoffe für die Anwendung in nichtlinear optischen Systemen erfolgte mittels solvatochromatischen Methoden, wie in J.Org.Chem., Vol. 54, Seiten 3774 bis 3778, 1989, sowie in der dort zitierten Literatur beschrieben.

## Patentansprüche

1. Methin- oder Azamethinfarbstoffe enthaltende Polymerisate, die als charakteristische Monomereinheiten Reste der Formeln I, II, III und IV 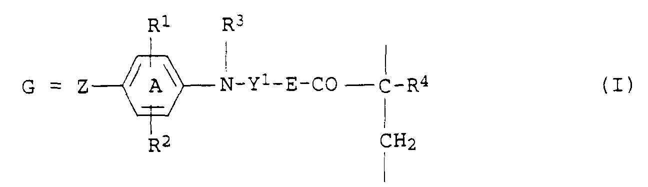 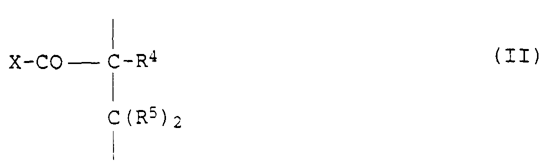 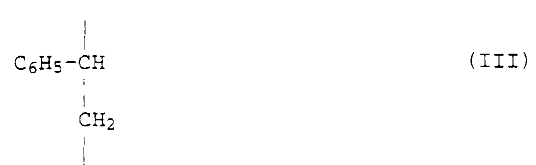 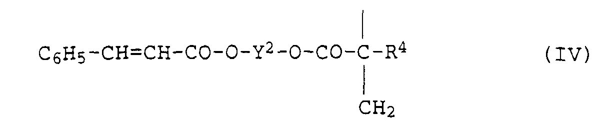 aufweisen, worin
G einen zweiwertigen Rest aus der Benzol-, Naphthalin-, Pyridin-, Chinolin-, Thiazol-, Benzthiophen- oder Triazolopyridinreihe,
Z Stickstoff oder CH,
R¹ und R² unabhängig voneinander jeweils Wasserstoff, C₁-C₆-Alkyl oder C₁-C₆-Alkoxy, das gegebenenfalls durch Phenyl oder C₁-C₄-Alkoxy substituiert ist,
R³ Wasserstoff, C₁-C₆-Alkyl, C₅-C₇-Cycloalkyl oder C₃-C₄-Alkenyl,
R⁴ Wasserstoff, Deuterium, Methyl, trideuteriertes Methyl oder Chlor,
R⁵ Wasserstoff oder Deuterium,
Y¹ und Y² unabhängig voneinander jeweils C₂-C₁₁-Alkylen, das gegebenenfalls durch 1 bis 3 Sauerstoffatome in Etherfunktion oder Imino- oder C₁-C₄-Alkyliminogruppen unterbrochen ist,
E Sauerstoff, Imino oder C₁-C₄-Alkylimino und
x Hydroxy, C₁-C₆-Alkoxy, trideuteriertes Methoxy, 2,3-Epoxypropoxy, Phenoxy, Amino oder C₁-C₄-Mono- oder Dialkylamino bedeuten und
der Ring A benzoanelliert sein kann,
wobei der Anteil der Monomereinheiten der Formel I 1 bis 100 Mol%, der der Formel II 0 bis 99 Mol%, der der Formel III 0 bis 99 Mol% und der der Formel IV 0 bis 75 Mol%, jeweils bezogen auf das Polymerisat, und das mittlere Molekulargewicht des Polymerisats 1.000 bis 100.000 betragen.

2. Methin- oder Azamethinfarbstoffe enthaltende Polymerisate nach Anspruch 1, dadurch gekennzeichnet, daß G einen Rest der Formel 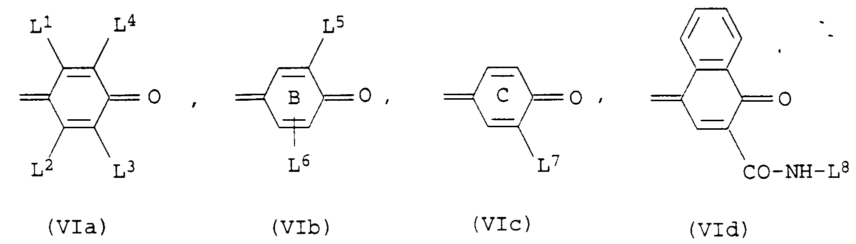 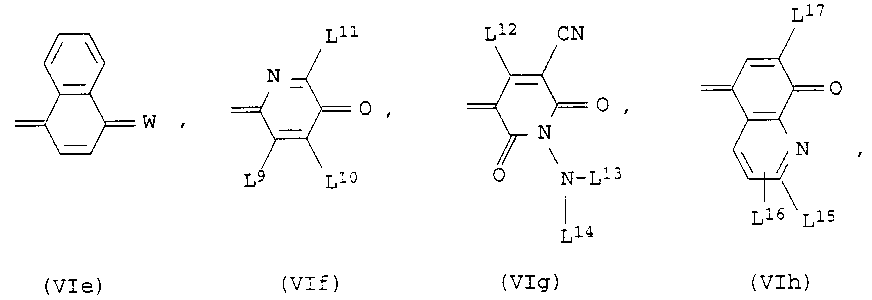 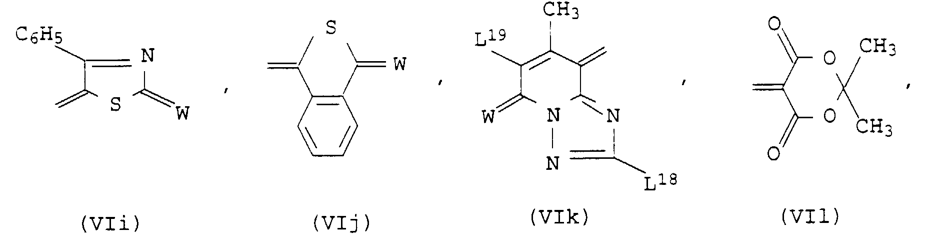 bedeutet, worin
die Ringe B und C benzoanelliert sein können und
L¹, L² und L³ unabhängig voneinander jeweils für Wasserstoff, Methyl, Fluor oder Chlor,
L⁴ für Fluor oder Chlor,
L⁵ für Wasserstoff, Fluor, Chlor, Brom, Hydroxy, Nitro, C₁-C₆-Alkyl, Cyano, C₁-C₄-Alkylsulfonylamino, C₁-C₆-Alkoxycarbonyl, C₁-C₄-Alkylcarbamoyl oder C₂-C₄-Alkanoylamino,
L⁶ für Wasserstoff, Fluor, Chlor, Cyano, C₁-C₄-Alkylcarbamoyl, C₂-C₄-Alkanoylamino, C₁-C₄-Alkylureido, C₁-C₄-Alkylsulfamoyl oder C₁-C₆-Alkoxycarbonyl,
L⁷ für einen Rest der Formel 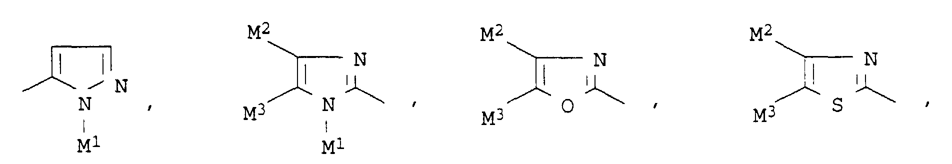 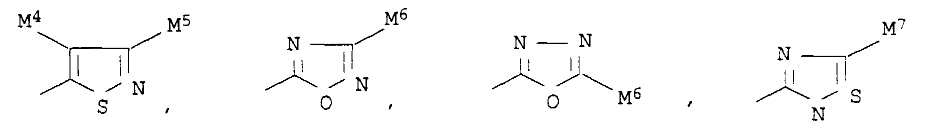 oder 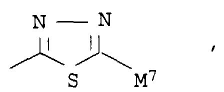
worin
M¹ die Bedeutung von Wasserstoff, C₁-C₆-Alkyl, Benzyl, Cyclohexyl, Phenyl oder Tolyl,
M² die Bedeutung von Wasserstoff, Chlor, C₁-C₆-Alkyl, das gegebenenfalls durch ein Sauerstoffatom in Etherfunktion unterbrochen ist, Phenyl, C₁-C₆-Alkoxy, Cyano oder C₁-C₆-Alkoxycarbonyl, wobei die Alkylgruppe durch ein oder zwei Sauerstoffatome in Etherfunktion unterbrochen sein kann,
M³ die Bedeutung von Wasserstoff, C₁-C₆-Alkyl, Phenyl, Cyano, Nitro oder C₁-C₆-Alkoxycarbonyl, wobei die Alkylgruppe durch ein oder zwei Sauerstoffatome in Etherfunktion unterbrochen sein kann, oder M² und M³ zusammen die Bedeutung eines anellierten Benzorings,
M⁴ die Bedeutung von Wasserstoff, Chlor, Cyano, Nitro oder C₁-C₆-Alkoxycarbonyl, wobei die Alkylgruppe durch ein oder zwei Sauerstoffatome in Etherfunktion unterbrochen sein kann,
M⁵ die Bedeutung von Chlor, C₁-C₆-Alkyl, das gegebenenfalls durch ein Sauerstoffatome in Etherfunktion unterbrochen ist, C₁-C₆-Alkoxy oder C₁-C₆-Alkylthio,
M⁶ die Bedeutung von C₁-C₆-Alkyl und
M⁷ die Bedeutung von Wasserstoff, Chlor, Cyano, Thiocyanato, C₁-C₆-Alkyl, das gegebenenfalls durch ein Sauerstoffatom in Etherfunktion unterbrochen ist, C₁-C₆-Alkoxy, C₁-C₆-Alkylthio, 2-(C₁-C₂-Alkoxycarbonyl)ethylthio oder C₁-C₆-Alkoxycarbonyl, wobei die Alkylgruppe durch ein oder zwei Sauerstoffatome in Etherfunktion unterbrochen sein kann, besitzen,
L⁸ für einen Rest der Formel 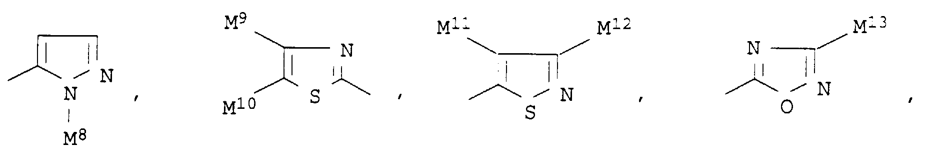 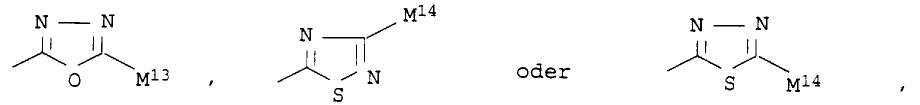
worin
M⁸ die Bedeutung von C₁-C₆-Alkyl oder Cyclohexyl,
M⁹ die Bedeutung von Wasserstoff, Chlor, C₁-C₆-Alkyl, das gegebenenfalls durch 1 Sauerstoffatom in Etherfunktion unterbrochen ist, C₁-C₆-Alkoxy oder C₁-C₆-Alkoxycarbonyl, wobei die Alkylgruppe durch 1 oder 2 Sauerstoffatome in Etherfunktion unterbrochen sein kann,
M¹⁰ die Bedeutung von Wasserstoff, C₁-C₆-Alkyl, Cyano, Nitro oder C₁-C₆-Alkoxycarbonyl, wobei die Alkylgruppe durch 1 oder 2 Sauerstoffatome in Etherfunktion unterbrochen sein kann,
M¹¹ die Bedeutung von Wasserstoff, Chlor, Cyano, Nitro oder C₁-C₆-Alkoxycarbonyl, wobei die Alkylgruppe durch 1 oder 2 Sauerstoffatome in Etherfunktion unterbrochen sein kann,
M¹² die Bedeutung von Chlor, C₁-C₆-Alkyl, das gegebenenfalls durch 1 Sauerstoffatom in Etherfunktion unterbrochen ist, C₁-C₆-Alkoxy oder C₁-C₆-Alkylthio,
M¹³ die Bedeutung von C₁-C₆-Alkyl und
M¹⁴ die Bedeutung von Wasserstoff, Chlor, Cyano, Thiocyanato, C₁-C₆-Alkyl, das gegebenenfalls durch 1 Sauerstoffatom in Etherfunktion unterbrochen ist, C₁-C₆-Alkoxy, C₁-C₆-Alkylthio, 2-(C₁-C₂-Alkoxycarbonyl)ethylthio oder C₁-C₆-Alkoxycarbonyl, wobei die Alkylgruppe durch 1 oder 2 Sauerstoffatome in Etherfunktion unterbrochen sein kann, besitzen,
L⁹ für Wasserstoff, Fluor, Chlor, Methyl oder einen Rest der Formel
-NH-CO-B¹, -NH-CO-OB¹, -NH-CO-NB¹B², NH-CS-OB¹, -NH-CS-B¹B², -NH-SO₂-B¹ oder -NH-SO₂-NB¹B²,
worin
B¹ und B² unabhängig voneinander jeweils die Bedeutung von C₁-C₄-Alkyl besitzen,
L¹⁰ Wasserstoff, Fluor oder Chlor oder L⁹ und L¹⁰ zusammen einen anellierten Benzoring,
L¹¹ für einen Rest der Formel
-CO-OB¹, -CO-NHB¹, -CO-NH-CO-B¹, -NH-CO-B¹, -NH-CO-OB¹, -NH-CO-NB¹B², -NH-CS-OB¹, -NH-CS-B¹B², -NH-SO₂-B¹ oder -NH-SO₂-NB¹B²,
worin
B¹ und B² jeweils die obengenannte Bedeutung besitzen,
L¹² für Wasserstoff oder C₁-C₄-Alkyl,
L¹³ und L¹⁴ unabhängig voneinander jeweils für Wasserstoff, C₁-C₁₂-Alkyl, C₅-C₇-Cycloalkyl, Phenyl, Pyridyl, C₁-C₆-Alkanoyl, C₁-C₆-Alkoxycarbonyl, C₁-C₆-Alkylsulfonyl, C₅-C₇-Cycloalkylsulfonyl, Phenylsulfonyl, Pyridylsulfonyl, Benzoyl, Pyridylcarbonyl oder Thienylcarbonyl oder R² und R³ zusammen mit dem sie verbindenden Stickstoffatom einen fünf- oder sechsgliedrigen gesättigten heterocyclischen Rest, der gegebenenfalls weitere Heteroatome enthält,
L¹⁵ für Wasserstoff oder C₁-C₆-Alkyl,
L¹⁶ für Wasserstoff, Fluor, Chlor oder Brom,
L¹⁷ für Fluor, Chlor oder Brom,
L¹⁸ für C₁-C₁₂-Alkyl, das durch ein bis drei Sauerstoffatome in Etherfunktion unterbrochen sein kann, Phenyl oder Hydroxy,
L¹⁹ für Cyano, Carbamoyl, Carboxyl oder C₁-C₆-Alkoxycarbonyl und
w für Sauerstoff oder einen Rest der Formel 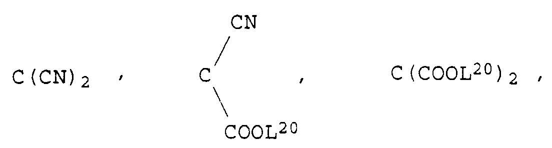 wobei L²⁰ C₁-C₆-Alkyl oder C₃-C₄-Alkenyl bedeutet, stehen.

3. Verwendung der Methin- oder Azamethinfarbstoffe enthaltenden Polymerisate gemäß Anspruch 1 in der nicht-linearen Optik.

4. Verwendung von Methin- oder Azamethinfarbstoffen der Formel V 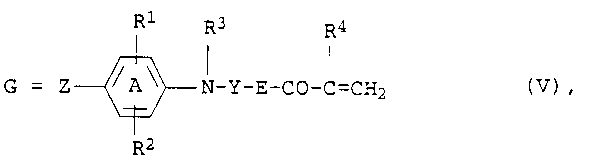 in der G, Z, R¹, R², R³, R⁴, Y, E und der Ring A jeweils die in Anspruch 1 genannte Bedeutung besitzen, zur Herstellung von Methin- oder Azamethinfarbstoffe enthaltenden Polymerisaten gemäß Anspruch 1.

## Claims

1. Methine or azamethine dye polymers containing as characteristic monomer units radicals of the formulae I, II, III and IV 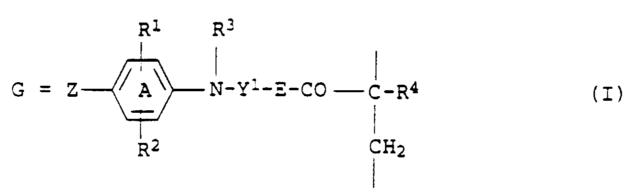 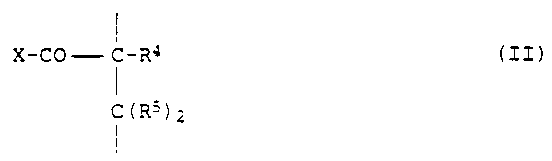 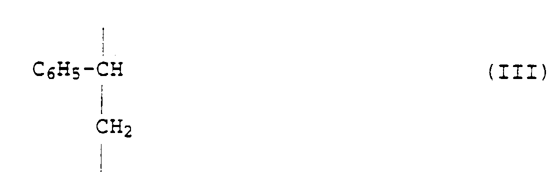 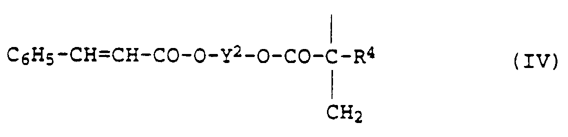 where
G is a divalent radical of the benzene, naphthalene, pyridine, quinoline, thiazole, benzothiophene or triazolopyridine series,
z is nitrogen or CH,
R¹ and R² are each independently of the other hydrogen, C₁-C₆-alkyl or C₁-C₆-alkoxy optionally substituted by phenyl or C₁-C₄-alkoxy,
R³ is hydrogen, C₁-C₆-alkyl, C₅-C₇-cycloalkyl or C₃-C₄-alkenyl,
R⁴ is hydrogen, deuterium, methyl, trideuterated methyl or chlorine,
R⁵ is hydrogen or deuterium,
Y¹ and Y² are each independently of the other C₂-C₁₁-alkylene optionally interrupted by from 1 to 3 oxygen atoms in ether function or imino or C₁-C₄-alkylimino groups,
E is oxygen, imino or C₁-C₄-alkylimino, and
X is hydroxyl, C₁-C₆-alkoxy, trideuterated methoxy, 2,3-epoxypropoxy, phenoxy, amino or C₁-C₄-mono- or -dialkylamino, and
the ring A can be benzofused,
the proportion of monomer units of the formula I being from 1 to 100 mol %, the proportion of monomer units of the formula II being from 0 to 99 mol %, the proportion of monomer units of the formula III being from 0 to 99 mol % and the proportion of monomer units of the formula IV being from 0 to 75 mol %, each percentage being based on the polymer, and the average molecular weight of the polymer being from 1,000 to 100,000.

2. Methine or azamethine dye polymers as claimed in claim 1, wherein G is a radical of the formula 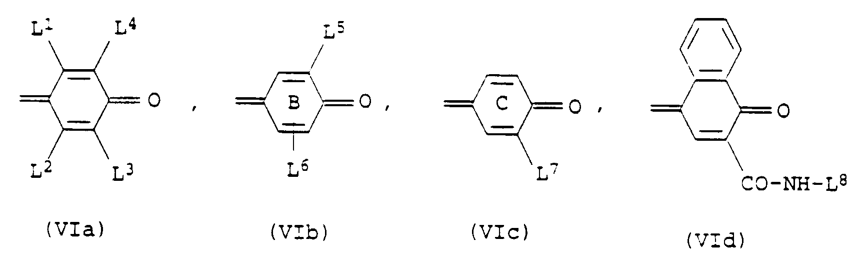 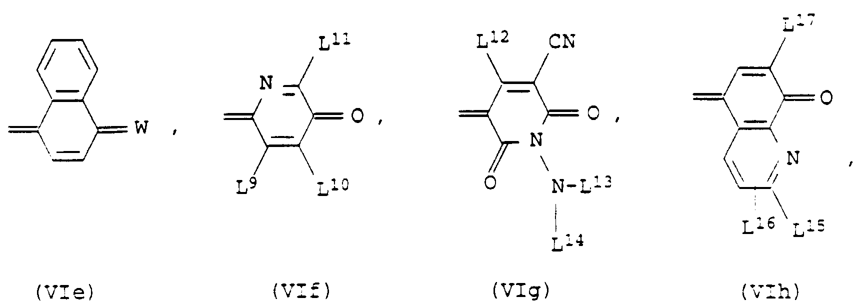 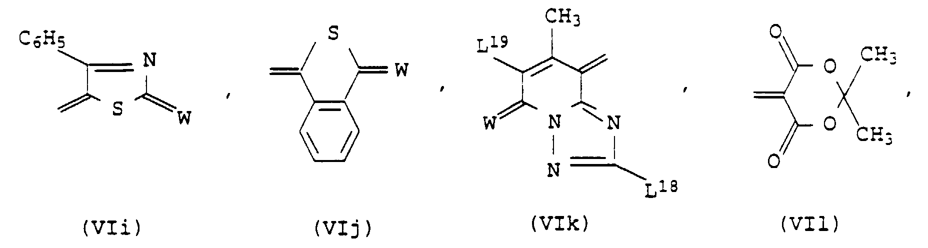 where
the rings B and C can each be benzofused,
L¹, L² and L³ are each independently of the others hydrogen, methyl, fluorine or chlorine,
L⁴ is fluorine or chlorine,
L⁵ is hydrogen, fluorine, chlorine, bromine, hydroxyl, nitro, C₁-C₆-alkyl, cyano, C₁-C₄-alkylsulfonylamino, C₁-C₆-alkoxycarbonyl, C₁-C₄-alkylcarbamoyl or C₂-C₄-alkanoylamino,
L⁶ is hydrogen, fluorine, chlorine, cyano, C₁-C₄-alkylcarbamoyl, C₂-C₄-alkanoylamino, C₁-C₄-alkylureido, C₁-C₄-alkylsulfamoyl or C₁-C₆-alkoxycarbonyl,
L⁷ is a radical of the formula 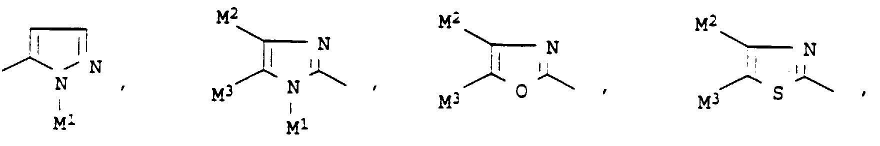 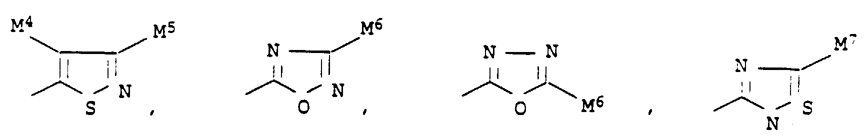 or 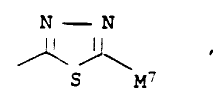
where
M¹ is hydrogen, C₁-C₆-alkyl, benzyl, cyclohexyl, phenyl or tolyl,
M² is hydrogen, chlorine, C₁-C₆-alkyl optionally interrupted by an oxygen atom in ether function, phenyl, C₁-C₆-alkoxy, cyano or C₁-C₆-alkoxycarbonyl, wherein the alkyl group may be interrupted by one or two oxygen atoms in ether function,
M³ is hydrogen, C₁-C₆-alkyl, phenyl, cyano, nitro or C₁-C₆-alkoxycarbonyl, wherein the alkyl group may be interrupted by one or two oxygen atoms in ether function, or M² and M³ together are a fused benzo ring,
M⁴ is hydrogen, chlorine, cyano, nitro or C₁-C₆-alkoxycarbonyl, wherein the alkyl group may be interrupted by one or two oxygen atoms in ether function,
M⁵ is chlorine, C₁-C₆-alkyl optionally interrupted by an oxygen atom in ether function, C₁-C₆-alkoxy or C₁-C₆-alkylthio,
M⁶ is C₁-C₆-alkyl, and
M⁷ is hydrogen, chlorine, cyano, thiocyanato, C₁-C₆-alkyl optionally interrupted by an oxygen atom in ether function, C₁-C₆-alkoxy, C₁-C₆-alkylthio, 2-(C₁-C₂-alkoxycarbonyl)ethylthio or C₁-C₆-alkoxycarbonyl, wherein the alkyl group may be interrupted by one or two oxygen atoms in ether function,
L⁸ is a radical of the formula 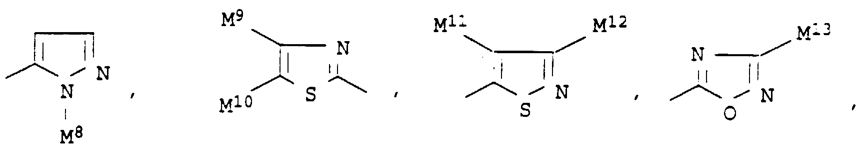 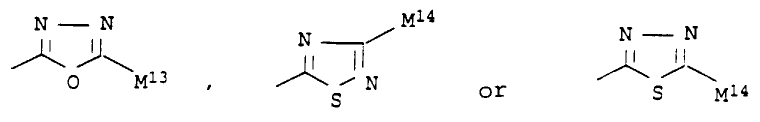
where
M⁸ is C₁-C₆-alkyl or cyclohexyl,
M⁹ is hydrogen, chlorine, C₁-C₆-alkyl optionally interrupted by 1 oxygen atom in ether function, C₁-C₆-alkoxy or C₁-C₆-alkoxycarbonyl, wherein the alkyl group may be interrupted by 1 or 2 oxygen atoms in ether function,
M¹⁰ is hydrogen, C₁-C₆-alkyl, cyano, nitro or C₁-C₆-alkoxycarbonyl, wherein the alkyl group may be interrupted by 1 or 2 oxygen atoms in ether function,
M¹¹ is hydrogen, chlorine, cyano, nitro or C₁-C₆-alkoxycarbonyl, wherein the alkyl group may be interrupted by 1 or 2 oxygen atoms in ether function,
M¹² is chlorine, C₁-C₆-alkyl optionally interrupted by 1 oxygen atom in ether function, C₁-C₆-alkoxy or C₁-C₆-alkylthio,
M¹³ is C₁-C₆-alkyl, and
M¹⁴ is hydrogen, chlorine, cyano, thiocyanato, C₁-C₆-alkyl optionally interrupted by 1 oxygen atom in ether function, C₁-C₆-alkoxy, C₁-C₆-alkylthio, 2-(C₁-C₂-alkoxycarbonyl)ethylthio or C₁-C₆-alkoxycarbonyl, wherein the alkyl group may be interrupted by 1 or 2 oxygen atoms in ether function,
L⁹ is hydrogen, fluorine, chlorine, methyl or a radical of the formula
-NH-CO-B¹, -NH-CO-OB¹, -NH-CO-NB¹B², NH-CS-OB¹, -NH-CS-B¹B², -NH-SO₂-B¹ or -NH-SO₂-NB¹B²,
where
B¹ and B² are each independently of the other C₁-C₄-alkyl,
L¹⁰ is hydrogen, fluorine or chlorine or L⁹ and L¹⁰ together are a fused benzo ring,
L¹¹ is a radical of the formula
-CO-OB¹, -CO-NHB¹, -CO-NH-CO-B¹, -NH-CO-B¹, -NH-CO-OB¹, -NH-CO-NB¹B², -NH-CS-OB¹, -NH-CS-B¹B², -NH-SO₂-B¹ or -NH-SO₂-NB¹B²,
where
B¹ and B² are each as defined above,
L¹² is hydrogen or C₁-C₄-alkyl,
L¹³ and L¹⁴ are each independently of the other hydrogen, C₁-C₁₂-alkyl, C₅-C₇-cycloalkyl, phenyl, pyridyl, C₁-C₆-alkanoyl, C₁-C₆-alkoxycarbonyl, C₁-C₆-alkylsulfonyl, C₅-C₇-cycloalkylsulfonyl, phenylsulfonyl, pyridylsulfonyl, benzoyl, pyridylcarbonyl or thienylcarbonyl, or R² and R³ are combined with the nitrogen atom joining them together into a five- or six-membered saturated heterocyclic radical which optionally contains further hetero atoms,
L¹⁵ is hydrogen or C₁-C₆-alkyl,
L¹⁶ is hydrogen, fluorine, chlorine or bromine,
L¹⁷ is fluorine, chlorine or bromine,
L¹⁸ is C₁-C₁₂-alkyl which may be interrupted by from one to three oxygen atoms in ether function, phenyl or hydroxyl,
L¹⁹ is cyano, carbamoyl, carboxyl or C₁-C₆-alkoxycarbonyl, and
w is oxygen or a radical of the formula 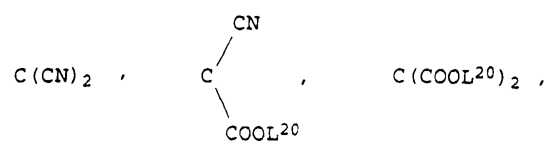 where L₂₀ is C₁-C₆-alkyl or C₃-C₄-alkenyl.

3. The use of the methine or azamethine dye polymers of claim 1 in nonlinear optics.

4. The use of methine or azamethine dyes of the formula V 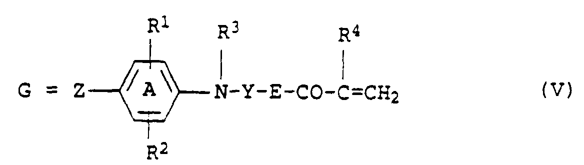 where G, Z, R¹, R², R³, R⁴, Y, E and the ring A are each as defined in claim 1, for preparing methine or azamethine dye polymers as claimed in claim 1.

## Revendications

1. Polymères contenant des colorants méthiniques ou azométhiniques, comportant en tant qu'unités monomères caractéristiques des restes de formules I, II, III et IV 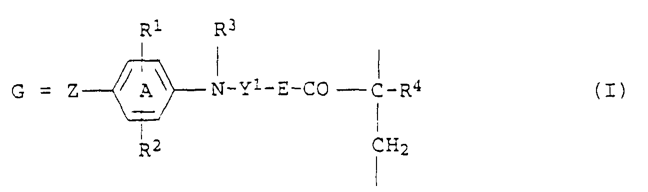 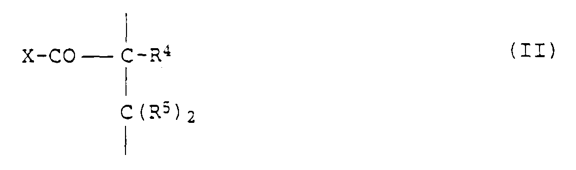 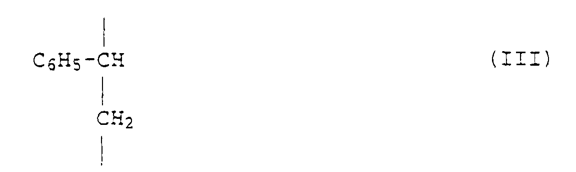 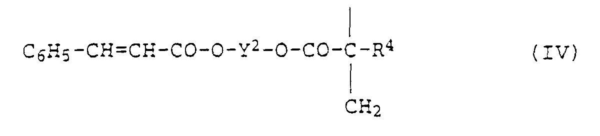 dans lesquelles
G représente un reste bivalent de la série du benzène, du naphtalène, de la pyridine, de la quinoléine, du thiazole, du benzothiophène ou de la triazolopyridine,
z représente un atome d'azote ou CH,
R¹ et R² représente chacun indépendamment l'un de l'autre un atome d'hydrogène, un groupement alkyle en C₁-C₆ ou alcoxy en C₁-C₆, qui est éventuellement substitué par un groupement phényle ou alcoxy en C₁-C₄,
R³ représente un atome d'hydrogène, un groupement alkyle en C₁-C₆, un groupement cycloalkyle en C₅-C₇ ou alcényle en C₃-C₄,
R⁴ représente un atome d'hydrogène, de deutérium, un groupement méthyle, un groupement trideutométhyle ou un atome de chlore,
R⁵ représente un atome d'hydrogène ou de deutérium,
Y¹ et Y² représentent chacun indépendamment l'un de l'autre, un groupement alkylène en C₂-C₁₁, qui est éventuellement interrompu par 1 à 3 atomes d'oxygène en fonction éther ou par des groupements imino ou (alkyl en C₁-C₄)imino,
E représente un atome d'oxygène, un groupement imino ou (alkyl en C₁-C₄)imino et
X représente un groupement hydroxy, alcoxy en C₁-C₆, trideutométhoxy, 2,3-époxypropoxy, phénoxy, amino ou (mono ou dialkyl en C₁-C₄)amino et
le cycle A peut être benzo-condensé,
la proportion des unités monomères de formule I s'élevant à 1-100 % en moles, celle des unités monomères de formule II à 0-99 % en moles, celle des unités monomères de formule III à 0-99 % en moles et celle des unités monomères de formule IV à 0-75 % en moles, à chaque fois par rapport au polymère, et le poids moléculaire moyen du polymère s'élevant à 1000 - 100 000.

2. Polymères contenant des colorants méthiniques ou azométhiniques selon la revendication 1, caractérisé en ce que G représente un reste de formule 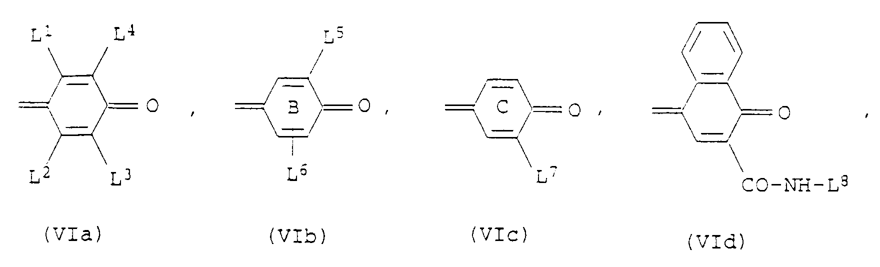 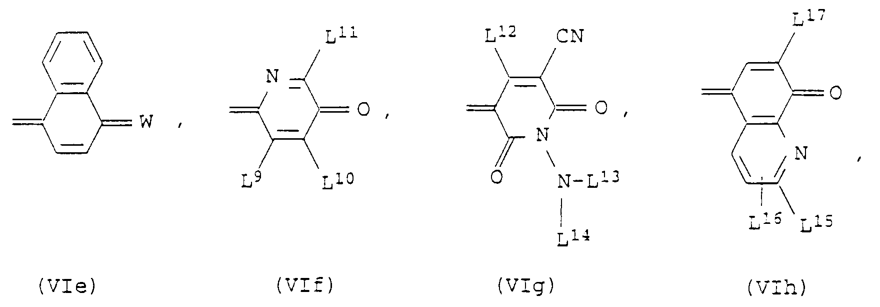 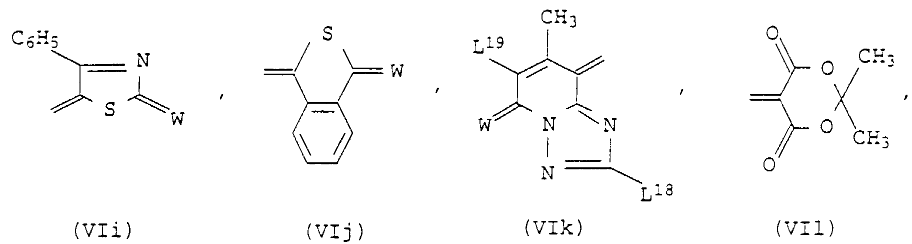 dans lesquelles
les cycles B et C peuvent être benzo-condensés et
L¹, L² et L³ représentent chacun indépendamment les uns des autres, un atome d'hydrogène, un groupement méthyle, un atome de fluor ou de chlore,
L⁴ représente un atome de fluor ou de chlore,
L⁵ représente un atome d'hydrogène, de fluor, de chlore, de brome, un groupement hydroxy, nitro, alkyle en C₁-C₆, cyano, (alkyl en C₁-C₄)sulfonylamino, (alcoxy en C₁-C₆)carbonyle, (alkyl en C₁-C₄)carbamoyle ou (alcanoyl en C₂-C₄)amino,
L⁶ représente un atome d'hydrogène, de fluor, de chlore, un groupement cyano, (alkyl en C₁-C₄)carbamoyle, (alcanoyl en C₂-C₄)amino, (alkyl en C₁-C₄)uréido, (alkyl en C₁-C₄)-sulfamoyle ou (alcoxy en C₁-C₆)carbonyle,
L⁷ représente un reste de formule 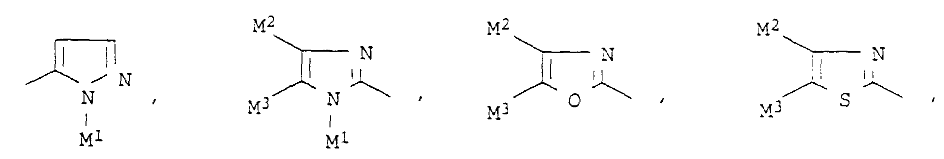 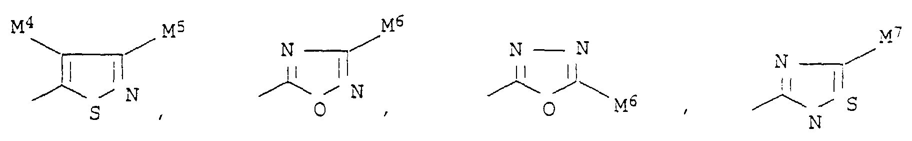 ou 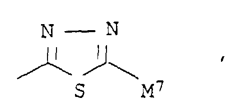
dans lesquelles
M¹ représente un atome d'hydrogène, un groupement alkyle en C₁-C₆, benzyle, cyclohexyle, phényle ou tolyle,
M² représente un atome d'hydrogène, de chlore, un groupement alkyle en C₁-C₆, qui peut éventuellement être interrompu par un atome d'oxygène en fonction éther, un groupement phényle, alcoxy en C₁-C₆, cyano ou (alcoxy en C₁-C₆)carbonyle, où les groupements alkyle peuvent être interrompus par un ou deux atomes d'oxygène en fonction éther,
M³ représente un atome d'hydrogène, un groupement alkyle en C₁-C₆, phényle, cyano, nitro ou (alcoxy en C₁-C₆)carbonyle, où les groupements alkyle peuvent être interrompus par un ou deux atomes d'oxygène en fonction éther, ou bien M² et M³ représentent ensemble un cycle benzénique condensé,
M⁴ représente un atome d'hydrogène, de chlore, un groupement cyano, nitro ou (alcoxy en C₁-C₆)carbonyle, où les groupements alkyle peuvent être interrompus par un ou deux atomes d'oxygène en fonction éther,
M⁵ représente un atome de chlore, un groupement alkyle en C₁-C₆, qui peut éventuellement être interrompu par un atome d'oxygène en fonction éther, un groupement alcoxy en C₁-C₆ ou (alkyl en C₁-C₆)thio,
M⁶ représente un groupement alkyle en C₁-C₆ et
M⁷ représente un atome d'hydrogène, de chlore, un groupement cyano, thiocyanato, alkyle en C₁-C₆, qui est éventuellement interrompu par un atome d'oxygène en fonction éther, un groupement alcoxy en C₁-C₆, (alkyl en C₁-C₆)thio, 2-((alcoxy en C₁-C₂)carbonyle)éthylthio ou (alcoxy en C₁-C₆)carbonyle, où les groupements alkyle peuvent être interrompus par un ou deux atomes d'oxygène en fonction éther,
L⁸ représente un reste de formule 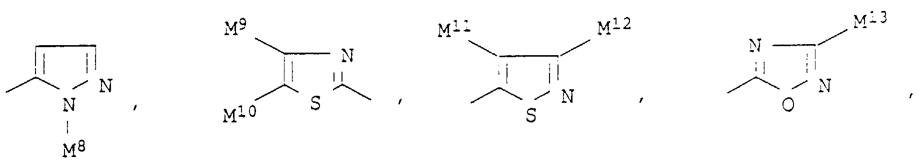 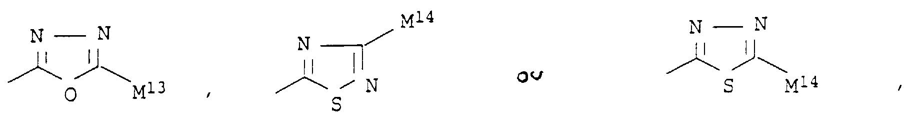
dans lesquelles
M⁸ représente un groupement alkyle en C₁-C₆ ou cyclohexyle,
M⁹ représente un atome d'hydrogène, de chlore, un groupement alkyle en C₁-C₆, qui est éventuellement interrompu par un atome d'oxygène en fonction éther, un groupement alcoxy en C₁-C₆ ou (alcoxy en C₁-C₆)carbonyle, où les groupements alkyle peuvent être interrompus par un à deux atomes d'oxygène en fonction éther,
M¹⁰ représente un atome d'hydrogène, un groupement alkyle en C₁-C₆, cyano, nitro ou (alcoxy en C₁-C₆)carbonyle, où les groupements alkyle peuvent être interrompus par 1 ou 2 atomes d'oxygène en fonction éther,
M¹¹ représente un atome d'hydrogène, de chlore, un groupement cyano, nitro ou (alcoxy en C₁-C₆)carbonyle, où les groupements alkyle peuvent être interrompus par 1 ou 2 atomes d'oxygène en fonction éther,
M¹² représente un atome de chlore, un groupement alkyle en C₁-C₆, qui peut éventuellement être interrompu par 1 atome d'oxygène en fonction éther, un groupement alcoxy en C₁-C₆ ou (alkyl en C₁-C₆)thio,
M¹³ représente un groupement alkyle en C₁-C₆ et
M¹⁴ représente un atome d'hydrogène, de chlore, un groupement cyano, thiocyanato, alkyle en C₁-C₆, qui est éventuellement interrompu par un atome d'oxygène en fonction éther, un groupement alcoxy en C₁-C₆, (alkyl en C₁-C₆)thio, 2-((alcoxy en C₁-C₂)carbonyle)éthylthio ou (alcoxy en C₁-C₆)carbonyle, où les groupements alkyle peuvent être interrompus par un ou deux atomes d'oxygène en fonction éther,
L⁹ représente un atome d'hydrogène, de fluor, de chlore, un groupement méthyle ou un reste de formule
-NH-CO-B¹, -NH-CO-OB¹, -NH-CO-NB¹B², NH-CS-OB¹, -NH-CS-B¹B², -NH-SO₂-B¹ ou -NH-SO₂-NB¹B²,
dans lesquelles
B¹ et B² représentent chacun indépendamment l'un de l'autre, un groupement alkyle en C₁-C₄,
L¹⁰ représente un atome d'hydrogène, de fluor ou de chlore, ou bien L⁹ et L¹⁰ représentent ensemble un cycle benzénique condensé,
L¹¹ représente un reste de formule
-CO-OB¹, -CO-NHB¹, -CO-NH-CO-B¹, -NH-CO-B¹, -NH-CO-OB¹, -NH-CO-NB¹B², NH-CS-OB¹, -NH-CS-B¹B², -NH-SO₂-B¹ ou -NH-SO₂-NB¹B²,
dans lesquelles
B¹ et B² prennent chacun la signification susmentionnée,
L¹² représente un atome d'hydrogène ou un groupement alkyle en C₁-C₄,
L¹³ et L¹⁴ représentent chacun indépendamment l'un de l'autre un atome d'hydrogène, un groupement alkyle en C₁-C₁₂, cycloalkyle en C₅-C₇, phényle, pyridyle, alcanoyle en C₁-C₆, (alcoxy en C₁-C₆)carbonyle, (alkyl en C₁-C₆)sulfonyle, (cycloalkyl en C₅-C₇)sulfonyle, phénylsulfonyle, pyridylsulfonyle, benzoyle, pyridylcarbonyle, ou thiénylcarbonyle, ou bien R² et R³ représentent ensemble avec l'atome d'azote qui les relie un reste hétérocyclique saturé à 5 ou 6 maillons, qui peut éventuellement contenir d'autres hétéroatomes,
L¹⁵ représente un atome d'hydrogène ou un groupement alkyle en C₁-C₆,
L¹⁶ représente un atome d'hydrogène, de fluor, de chlore ou de brome,
L¹⁷ représente un atome de fluor, de chlore ou de brome,
L¹⁸ représente un groupement alkyle en C₁-C₁₂, qui peut être interrompu par 1 à 3 atomes d'oxygène en fonction éther, un groupement phényle ou hydroxy,
L¹⁹ représente un groupement cyano, carbamoyle, carboxyle ou (alcoxy en C₁-C₆)carbonyle et
w représente un atome d'oxygène ou un reste de formule 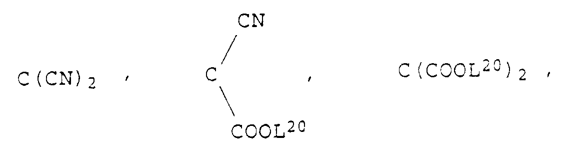 dans lesquelles L²⁰ représente un groupement alkyle en C₁-C₆ ou alcényle en C₃-C₄.

3. Utilisation de polymères contenant des colorants méthiniques ou azométhiniques selon la revendication 1 en optique non-linéaire.

4. Utilisation de colorants méthiniques ou azométhiniques de formule V 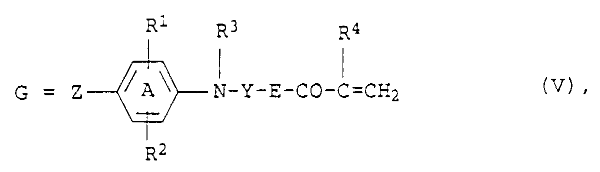 dans laquelle G, Z, R¹, R², R³, R⁴, Y, E et le cycle A prennent chacun la signification citée dans la revendication 1, pour la préparation de polymères contenant des colorants méthiniques ou azométhiniques selon la revendication 1.
